# EUROPEAN PATENT SPECIFICATION

(11) **EP 4 721 820 B1**
(45) Date of publication and mention of the grant of the patent: **29.07.2026**
(21) Application number: 24204274.5
(22) Date of filing: 02.10.2024
(51) Int. Cl.: A62B 35/00, F16G 15/08

(54) **BACKUP SWIVEL FOR PROVIDING DOUBLE SAFETY**
BACKUP-DREHGELENK ZUR BEREITSTELLUNG VON DOPPELTER SICHERHEIT
PIVOT DE SECOURS POUR FOURNIR UNE DOUBLE SÉCURITÉ

(43) Date of publication of application: 08.04.2026
(73) Proprietor: SKYLOTEC GmbH, 56566 Neuwied (DE)
(72) Inventor: Mahne, Domen, 6221 Dutovlje (SI); Cotic, Klemen, 6240 Kozina (SI); Staut, Miha, 6000 Koper (SI)
(74) Representative: Michalski Hüttermann & Partner mbB

(56) References cited:
- EP-B1- 2 528 665
- WO-A1-2018/127908
- CN-U- 206 972 826
- DE-B4- 102011 017 736
- NO-B1- 335 406

## Description

### FIELD OF INVENTION

The invention relates to a swivel for providing double safety, comprising a first connecting means, a second connecting means, a first bracket configured for connecting a first rope and/or a first carabiner and a second bracket configured for connecting a second rope and/or a second carabiner, whereby the first connecting means and the second connecting means are attached together in a twistable manner.

### BACKGROUND

In today's logistic technical rescue procedures doubled safety elements became standard. This means in short that two independent safety systems are being employed for any maneuver, such as for example two independent anchors, each clipped with its respective connector, connecting two separate pulleys rigged with two ropes etc. Thereby, each and every safety element can be doubled fairly easily, while a swivel is difficult to double.

In particular and in a possible scenario, two parallel ropes on which a load, such as most commonly a stretcher, is suspended. If the stretcher starts spinning, the two ropes start twisting around each other. Putting such swivel on one end would solve this problem but the requirement of retaining double safety bars it.

WO 2018/127908 A1 describes a remote anchoring apparatus. CN 206 972 826 U describes a lanyard with at least one belt or rope connected with a swivel connector. DE 10 2011 017736 B4 describes a swivel arrangement. EP 2 528 665 B1 describes a twist protection arrangement. NO 335 406 B1 describes an underwater interconnection system.

### SUMMARY OF SOME EMBODIMENTS OF THE INVENTION

It is an object of the invention to provide a swivel that allows providing doubled safety in fields such as, for example, technical rescue, rope access or stage rigging.

The object is solved by the features of the independent claim. Preferred embodiments are described by the features of the dependent claims.

Thus, the object is solved by a backup swivel according to claim 1.

It is therefore a key point of the invention to provide a backup swivel that can be used with a main swivel arranged therein, thereby providing doubled safety in technical rescue or other fields of roping where double safety is required or sought after. In other words, the proposed solution allows that the main swivel can be inserted into the backup swivel such that two swivels i.e. the proposed backup swivel and the main swivel can be used together for implementing double safety across the complete safety chain.

Such wise, if for example two parallel ropes on which a load, for example a stretcher, is suspended, it becomes possible that if the stretcher starts spinning the two ropes do not start twisting around each other anymore, since the two swivels, i.e. the proposed backup swivel and the main swivel, prevent such twisting around each other. As said, a hollow space inside the first connecting ring can be used to accommodate a preferably rescue rated main swivel and thus doubling safety of such system, if at least two connectors are used on each side and each of the connector clips into the inner main swivel and the respective bracket of the backup swivel at the same time.

Thus, in one possible respectively preferred implementation, the backup swivel comprises two hollow cylinders as first connecting ring and second connecting ring which rotate around each other and two attachment brackets comprising the first bracket and the second bracket connected to said cylinders, whereby the main swivel is arrangeable within the backup swivel. In another possible implementation the at least one main rope is arranged within and/or passed through the backup swivel. The main swivel does preferably not comprise an opening and/or hollow space inside its connecting rings. The carabiner, in particular the at least one first backup carabiner and/or the at least one second backup carabiner, can be provided as connector, shekel or the like. The first connecting ring and the second connecting ring are preferably axially non-displaceable but twistable connected. Preferably the backup swivel is provided as a load sharing device as specified in EN 17961:2023 standard. The first connecting ring and the second connecting ring are attached together in a twistable manner means preferably that the first connecting ring and the second connecting ring are able to rotate with respect to one another with a relative movement of rotation. The first connecting ring and the second connecting ring are preferably tubular-shaped and/or being able to be coaxially nested in one another.

According to a preferred implementation the first connecting ring and the second connecting ring are attached together in a twistable manner by means of a particular plain bearing. Preferably, the bearing is provided as polymer plain bearing, thereby reducing friction between the first connecting ring and the second connecting ring.

In another preferred implementation, the first connecting ring comprises and/or is part of a first connecting cylinder, the second connecting ring comprises and/or is part of a second connecting cylinder and the first connecting cylinder is radially at least partly arranged within the second connecting cylinder. Preferably the first connecting cylinder and/or the second connecting cylinder comprises in axial top view a ring-shaped profile respectively shape. Preferably, the first connecting ring and/or the second connecting ring are provided as hollow cylinders. The first connecting cylinder is preferred provided as inner cylinder and/or the second connecting cylinder is provided as outer cylinder.

According to a further preferred implementation the second connecting cylinder comprises a greater outer diameter than the first connecting cylinder, an inner diameter of the second connecting cylinder basically or roughly, in particular matches the outer diameter of the first connecting cylinder and/or the first connecting cylinder comprises a greater axial extension than the second connecting cylinder. Preferably the inner diameter of the second connecting cylinder is slightly greater the outer diameter of the first connecting cylinder such that the first connecting cylinder and the second connecting cylinder can be twisted. An inner diameter of the first connecting cylinder and/or the opening preferably comprises a free, radially extending diameter of 2, 3, 4, 5, 6, 10, 15, 20, 25 or 30 cm or ≤ 2, ≤ 3, ≤ 4, ≤ 5, ≤ 6, ≤ 10. ≤ 15, ≤ 20, ≤ 25 or ≤ 30 cm.

In another preferred implementation, the first connecting cylinder comprises a radially extending collar configured for limiting an axial displacement of the second connecting cylinder. Preferably, the collar is provided as flange. For mounting the backup swivel, the second connecting cylinder can be slid on an outside of the first connecting cylinder. A second connecting cylinder's inner diameter is preferably slightly larger than a first connecting cylinder's outer diameter. By means of the collar the first connecting cylinder prevents the second connecting cylinder to slide in a direction of an expected force. In top view, the collar is preferably provided as washer or washer-like. Preferably, the bearing is in particular axially arranged between collar and second connecting cylinder, for such wise reducing friction when the first connecting cylinder and/or the second connecting cylinder rotates.

According to a further preferred implementation the first bracket is attached to the first connecting cylinder at one end thereof and the collar is arranged at another opposite end of the first connecting cylinder such that in particular the second connecting cylinder is axially arranged between the collar and the first bracket. Such wise the second connecting cylinder can be axially fixated while being twistable between the collar and the first bracket.

In another preferred implementation, the collar and the second connecting cylinder comprise an equal, a same or a smaller, in particular 3%. 5% or 10% smaller, outer diameter. Such wise the collar and the second connecting cylinder, when having the equal diameter, do radially not overlap each other, such that the backup swivel cannot get caught by the collar when in use. The same advantage applies when the collar comprises the smaller outer diameter than the second connecting cylinder.

According to a further preferred implementation the first bracket is swiveling attached to the first connecting ring and/or the second bracket is swiveling attached to the second connecting ring. Such implementation is advantageous since the first bracket in the second bracket can be swiveled aside for such wise easily mounting respectively inserting the main swivel.

In another preferred implementation, a swiveling axis of the first bracket and/or the second bracket extends orthogonal to a twistable axis of the first connecting ring and the second connecting ring.

According to a further preferred implementation the first bracket is attached to the first connecting ring and/or the second bracket is attached to the second connecting ring by a rivet, a bolt, a positive mechanical engagement in terms of shape, etc. and/or any other means allowing a swiveling connection. Thus, for example, the first bracket can be attached to the first connecting ring and/or the second bracket can be attached to the second connecting ring by a respectively fitting shape connecting the respective two elements. Preferably, each one rivet is arranged on one opposite side. Such rivets allow an easy implementation for attaching the first bracket and/or the second bracket in a swiveling manner.

According to a further preferred implementation, the first connecting cylinder comprises two axially extending grooves arranged on opposite outer side, which allow the second connecting cylinder with riveted first bracket to be slid onto the first connecting cylinder. Further preferably. Two small notches can be arranged on opposite inner sides of the first connecting cylinder, which allow rivets of the first bracket to sit a little deeper in a respective hole and thus lay flatter with a first connecting cylinder inner surface. Such measures minimize risk of interference between the inner rescue main swivel and head of the rivets. The proposed solution comprises a compact design, which can be easily stowed away and clipped to an attachment point if both brackets are rotated to lay flat against each other.

In another preferred implementation, the first bracket and/or the second bracket is provided as a round or arch-like bracket attached with respective opposite ends to opposite radial sides of the first connecting ring and/or the second connecting ring. Preferably, the respective bracket is provided, in sideview, as c- or u-shaped bracket.

The object is further solved by a swivel arrangement comprising the backup swivel as described before and the main swivel, whereby the main swivel is arranged within and/or passed through the first connecting ring and the second connecting ring. In such way safety of the arrangement is doubled, for example if at least two connectors are used on each side of the arrangement and each of connector clips into the main swivel and the backup swivel at the same time. During normal operation, for example only the main swivel can be loaded, while the backup swivel just follows rotation unloaded. In case of a failure of the main swivel, the backup swivel takes on the load.

Other example embodiments of the invention will be described in the following with reference to the figures. It has to be noted that the figures are only provided for illustration of the general concept of the invention by examples not defining the scope of protection of the invention. The figures are not drawn to scale. Features shall not be considered to be essential for the present invention because they are depicted in the figures.

### BRIEF DESCRIPTION OF THE FIGURES

In the figures
- Fig. 1: shows a backup swivel according to the invention in a perspective view,
- Fig. 2: shows the backup swivel of Fig. 1 in a perspective top view, and
- Fig. 3: shows the backup swivel of Fig. 1 in a perspective side view.

### DETAILED DESCRIPTION OF THE FIGURES

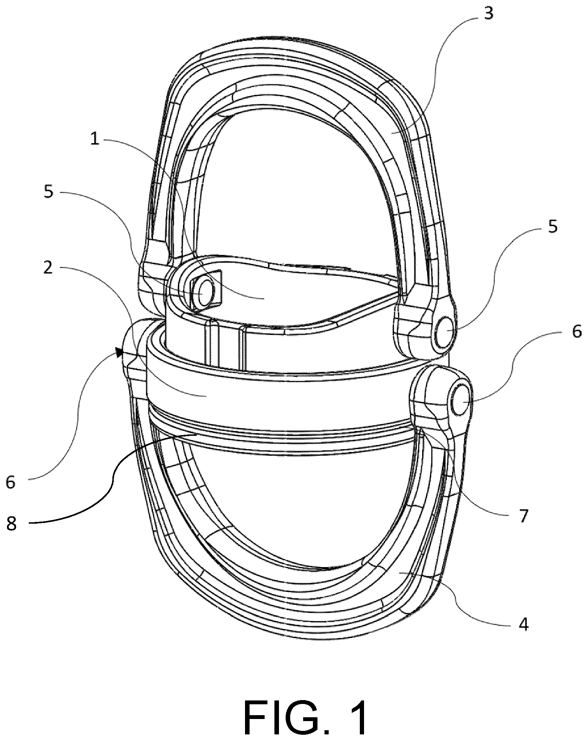

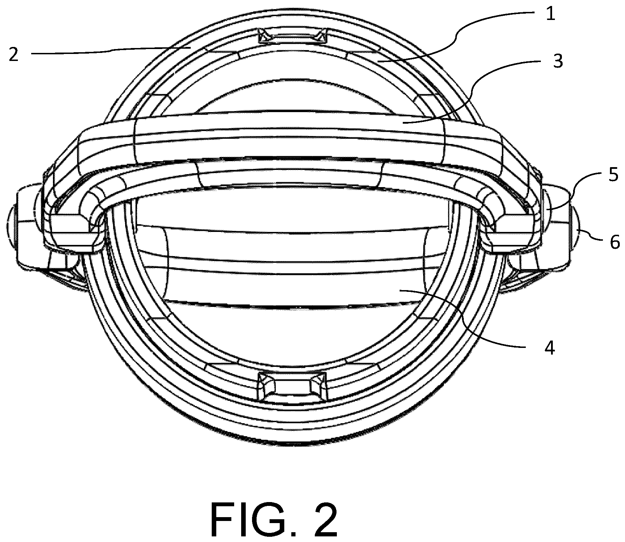

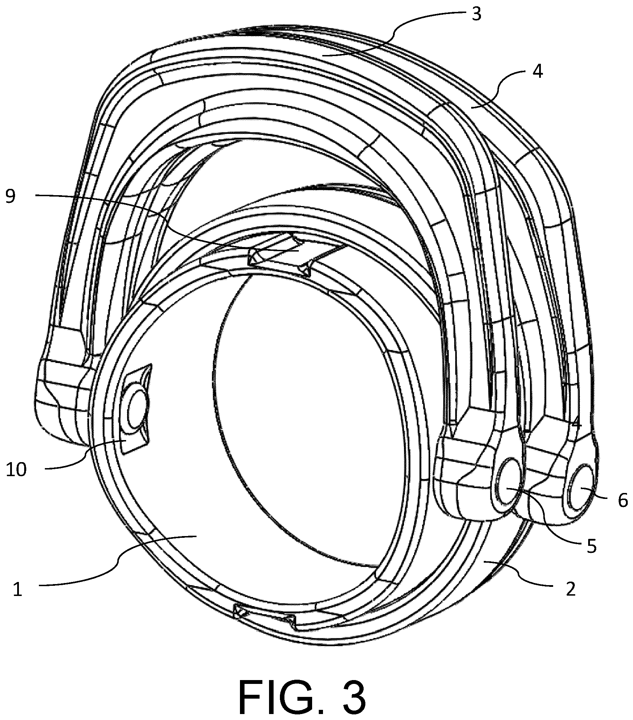

The invention will be described in the following with reference to exemplary implementation showing a backup swivel according to the invention. Specifically, Fig. 1 shows the backup swivel according to the invention in a perspective view, Fig. 2 shows the backup swivel of Fig. 1 in a perspective top view and Fig. 3 shows the backup swivel of Fig. 1 in a perspective side view. The backup swivel is intended for providing double safety when rescuing a person, thereby allowing that a main swivel can be operated within respectively inside the backup swivel for providing said double safety. Such wise two independent safety systems can be employed for maneuvers.

The backup swivel comprises a first connecting ring 1, which is provided as a first hollow cylinder 1, and a second connecting ring 2, which is provided as a second hollow cylinder 2. The first connecting cylinder 1 is arranged within the second connecting cylinder 2 so that the first connecting cylinder 1 is twistable in respect to the second connecting cylinder 2. Therefore, an outer diameter of the first connecting cylinder 1 matches respectively/or is slightly smaller than an inner diameter of the second connecting cylinder 2.

Such wise the second connecting cylinder 2 encompasses in a nearly touching manner the first connecting cylinder 1. The first connecting cylinder 1 comprises an inner diameter respectively radially extending opening having a diameter of, for example, 5 cm such that the main swivel, not depicted, can be arranged within said opening. Alternatively, a main rope or a plurality of main ropes can be arranged within said opening. In a top view, the first connecting cylinder 1 and the second connecting cylinder 2 comprise a ring shape. The first connecting cylinder 1 comprises a larger axial extension than the second connecting cylinder 2.

The backup swivel further comprises a first bracket 3, which is configured for connecting a first backup rope and/or a first backup carabiner, both not depicted, and a second bracket 4, which is configured for connecting a second backup rope and/or a second backup carabiner, both not depicted. In an alternative mode of use, three ropes can be employed, namely the first rope as first backup rope attached to the first bracket 3, the second rope as second backup rope attached to the second bracket 4 and the third rope passed through the openings of first connecting cylinder 1 and the second connecting cylinder 2.

In a further possible implementation respective first and second brackets 3, 4 of the backup swivel and of the main swivel are each connected together by one or two carabiners to which respective first and second backup ropes and first and second main ropes are connected, for such wise providing double safety. Said first and second backup ropes and first and second main ropes can also directly connected to the respective first and second brackets 3, 4 of the backup swivel and of the main swivel. In another possible implementation the main rope is arranged within the backup swivel, passing through the first connecting cylinder 1 and the second connecting cylinder 2.

The first bracket 3 and a second bracket 4 are each provided as half-round or arch-like brackets having c- respectively u-shape in sideview. The first bracket 3 is attached with its respective opposite ends to opposite radial sides of the first connecting cylinder 1 and the second bracket 4 is attached with its respective opposite ends to opposite radial sides of the first connecting cylinder 2.

Thereby, as can be seen from the Figs., the respective opposite ends are attached by radially extending rivets 5, 6. Such wise the first bracket 3 is attached swiveling to the first connecting cylinder 1 and the second bracket 4 is attached swiveling to the second connecting ring 2. Such way a swiveling axis of the first bracket 3 and of the second bracket 4 extends orthogonal to a twistable axis of the first connecting cylinder 1 and the second connecting cylinder 2. In Figs. 1 and 2, the first bracket 3 and the second bracket 4 extend in axial direction, whereby in Fig. 3 the first bracket 3 and the second bracket 4 are swiveled to the side such that the main swivel can be inserted into the opening formed by the first connecting cylinder 1 and the second connecting cylinder 2.

As can be seen in particular from Fig. 3, first connecting cylinder 1 comprises two axially extending grooves 9 on opposite sides of an outer surface, which allow the second connecting cylinder 2 with riveted second bracket 4 to be slid onto the first connecting cylinder 1. The first connecting cylinder 1 comprises two small notches 10 on an inner surface of the first connecting cylinder 1, which allow the rivets 5 of the first connecting cylinder 1 to sit a little deeper thus lay flatter with the inner surface of the first connecting cylinder 1. Such measures minimize a risk of interference between the main swivel and head of the rivets 5. The first connecting cylinder 1, the second connecting cylinder 2, the first bracket 3 and the second bracket 4 are provided as metal parts, for example made of aluminum.

As explained before, the first connecting ring 1 and the second connecting cylinder 2 are attached together in a twistable manner. Therefore, the first connecting cylinder 1 comprises a radially extending collar 8, which, in a connected state as shown in Fig. 1, limits an axial displacement of the second connecting cylinder 2. The collar 8 is arranged at one axial end of the first connecting cylinder 1, while the rivets 5 connecting the first bracket 3 are arranged at another opposite axial end of the first connecting cylinder 1. Such wise the second connecting cylinder 2 is axially fixed while being twistable between the collar 8 and the first bracket 3. The collar 8 and the second connecting cylinder 2 comprise a same outer diameter. Thereby, the collar 8 and the second connecting cylinder 2 form a plane bearing 7.

Depicted or described connections between components are generally to be understood to be functional connections. They can be implemented as direct links or as indirect links via several other components. The order of presented actions is not mandatory; alternative orders are possible. Actions can be implemented in different ways. They could be implemented in software using program instructions; or they could be implemented in hardware; or they could be implemented making use of a combination of hardware and software. It is to be understood that the described embodiments are examples only, which may be modified and/or supplemented in many ways within the scope of the claims. In particular, any feature described for a particular embodiment can be used by itself or in combination with other features in any other embodiment. Each feature that has been described for an embodiment of a particular category can also be used in an equivalent manner in an embodiment of any other category.

### REFERENCE NUMERALS

| | |
|---|---|
| First connecting ring, first connecting cylinder | 1 |
| Second connecting ring, second connecting cylinder | 2 |
| First bracket | 3 |
| Second bracket | 4 |
| Rivet | 5 |
| Rivet | 6 |
| Bearing | 7 |
| Collar | 8 |
| Groove | 9 |
| Notch | |

## Claims

1. Backup swivel for providing double safety, comprising
a first connecting ring (1) configured for passing through at least one main rope and/or a main swivel,
a second connecting ring (2) configured for passing through the at least one main rope and/or the main swivel,
a first u-shaped bracket (3) configured for connecting at least one first backup rope and/or at least one first backup carabiner and
a second u-shaped bracket (4) configured for connecting at least one second backup rope and/or at least one second backup carabiner, whereby
the first connecting ring (1) and the second connecting ring (2) are attached together in a twistable manner,
the first u-shaped bracket (3) is attached to the first connecting ring (1) and the second u-shaped bracket (4) is attached to the second connecting ring (2),
the first connecting ring (1) comprises and/or is part of a first connecting cylinder of the backup swivel, the second connecting ring (2) comprises and/or is part of a second connecting cylinder of the backup swivel and the first connecting cylinder is radially at least partly arranged within the second connecting cylinder,
the first u-shaped bracket (3) is swiveling attached with its legs to the first connecting ring (1) and/or the second u-shaped bracket (4) is swiveling attached with its legs to the second connecting ring (2), and
a swiveling axis of the first u-shaped bracket (3) and/or the second u-shaped bracket (4) extends orthogonal to a twistable axis of the first connecting ring (1) and the second connecting ring (2).

2. Backup swivel according to the previous claim, whereby the first connecting ring (1) and the second connecting ring (2) are attached together in a twistable manner by means of a bearing (7).

3. Backup swivel according to any of the previous claims, whereby the second connecting cylinder comprises a greater outer diameter than the first connecting cylinder, an inner diameter of the second connecting cylinder roughly matches, in particular matches the outer diameter of the first connecting cylinder and/or the first connecting cylinder comprises a greater axial extension than the second connecting cylinder.

4. Backup swivel according any of the previous two claims, whereby the first connecting cylinder comprises a radially extending collar (8) configured for limiting an axial displacement of the second connecting cylinder.

5. Backup swivel according to the previous claim, whereby the first u-shaped bracket (3) is attached to the first connecting cylinder at one end thereof and the collar (8) is arranged at another opposite end of the first connecting cylinder such that in particular the second connecting cylinder is axially arranged between the collar (8) and the first u-shaped bracket (3).

6. Backup swivel according to any of the previous two claims, whereby
the collar (8) and the second connecting cylinder comprise an equal outer diameter, or
the collar (8) comprises a smaller, in particular 3% smaller, outer diameter than the second connecting cylinder.

7. Backup swivel according to any of the previous claims, whereby the first u-shaped bracket (3) is attached to the first connecting ring (1) and/or the second u-shaped bracket (4) is attached to the second connecting ring (2) such as in particular by a rivet (5, 6) and/or a bolt.

8. Backup swivel according to any of the previous claims, whereby the first u-shaped bracket (3) and/or the second u-shaped bracket (4) is provided as an arch-like bracket attached with respective opposite ends to opposite radial sides of the first connecting ring (1) and/or the second connecting ring (2).

9. Swivel arrangement comprising the backup swivel according to any of the previous claims and the main swivel, whereby the main swivel is arranged within and/or passed through the first connecting ring (1) and the second connecting ring (2).

## Patentansprüche

1. Backup-Drehgelenk (Swivel) zum Bereitstellen von doppelter Sicherheit, aufweisend:
einen ersten Verbindungsring (1), der zum Durchführen mindestens eines Hauptseils und/oder eines Hauptdrehgelenks konfiguriert ist;
einen zweiten Verbindungsring (2), der zum Durchführen des mindestens einen Hauptseils und/oder des Hauptdrehgelenks konfiguriert ist;
eine erste U-förmige Halterung (3), die zum Verbinden mindestens eines ersten Backup-Seils und/oder mindestens eines ersten Backup-Karabiners konfiguriert ist; und
eine zweite U-förmige Halterung (4), die zum Verbinden mindestens eines zweiten Backup-Seils und/oder mindestens eines zweiten Backup-Karabiners konfiguriert ist, wobei
der erste Verbindungsring (1) und der zweite Verbindungsring (2) auf eine verdrehbare Weise miteinander verbunden sind,
die erste U-förmige Halterung (3) am ersten Verbindungsring (1) befestigt ist und die zweite U-förmige Halterung (4) am zweiten Verbindungsring (2) befestigt ist,
der erste Verbindungsring (1) einen ersten Verbindungszylinder des Backup-Drehgelenks aufweist und/oder Teil davon ist, der zweite Verbindungsring (2) einen zweiten Verbindungszylinder des Backup-Drehgelenks aufweist und/oder Teil davon ist und der erste Verbindungszylinder radial zumindest teilweise innerhalb des zweiten Verbindungszylinders angeordnet ist,
die erste U-förmige Halterung (3) mit ihren Schenkeln schwenkbar am ersten Verbindungsring (1) befestigt ist und/oder die zweite U-förmige Halterung (4) mit ihren Schenkeln schwenkbar am zweiten Verbindungsring (2) befestigt ist, und
eine Schwenkachse der ersten U-förmigen Halterung (3) und/oder der zweiten U-förmigen Halterung (4) sich orthogonal zu einer Verdrehachse des ersten Verbindungsrings (1) und des zweiten Verbindungsrings (2) erstreckt.

2. Backup-Drehgelenk nach dem vorhergehenden Anspruch, wobei der erste Verbindungsring (1) und der zweite Verbindungsring (2) mittels eines Lagers (7) auf eine verdrehbare Weise aneinander befestigt sind.

3. Backup-Drehgelenk nach einem der vorhergehenden Ansprüche, wobei der zweite Verbindungszylinder einen größeren Außendurchmesser als der erste Verbindungszylinder aufweist, der Innendurchmesser des zweiten Verbindungszylinders in etwa, insbesondere genau, dem Außendurchmesser des ersten Verbindungszylinders gleicht und/oder der erste Verbindungszylinder eine größere axiale Abmessung hat als der zweite Verbindungszylinder.

4. Backup-Drehgelenk nach einem der beiden vorhergehenden Ansprüche, wobei der erste Verbindungszylinder einen sich radial erstreckenden Kragen (8) aufweist, der zum Begrenzen eines axialen Versatzes des zweiten Verbindungszylinders konfiguriert ist.

5. Backup-Drehgelenk nach dem vorhergehenden Anspruch, wobei die erste U-förmige Halterung (3) an einem Ende des ersten Verbindungszylinders befestigt ist und der Kragen (8) an einem anderen, gegenüberliegenden Ende des ersten Verbindungszylinders angeordnet ist, so dass insbesondere der zweite Verbindungszylinder axial zwischen dem Kragen (8) und der ersten U-förmigen Halterung (3) angeordnet ist.

6. Backup-Drehgelenk nach einem der beiden vorhergehenden Ansprüche, wobei
der Kragen (8) und der zweite Verbindungszylinder einen gleichen Außendurchmesser aufweisen, oder
der Kragen (8) einen kleineren, insbesondere um 3% kleineren Außendurchmesser als der zweite Verbindungszylinder aufweist.

7. Backup-Drehgelenk nach einem der vorhergehenden Ansprüche, wobei die erste U-förmige Halterung (3) am ersten Verbindungsring (1) befestigt ist und/oder die zweite U-förmige Halterung (4) am zweiten Verbindungsring (2) befestigt ist, insbesondere mittels einer Niete (5, 6) und/oder einer Schraube.

8. Backup-Drehgelenk nach einem der vorhergehenden Ansprüche, wobei die erste U-förmige Halterung (3) und/oder die zweite U-förmige Halterung (4) als eine bogenförmige Halterung ausgebildet ist, die mit ihren jeweiligen gegenüberliegenden Enden an gegenüberliegenden radialen Seiten des ersten Verbindungsrings (1) und/oder des zweiten Verbindungsrings (2) befestigt ist.

9. Drehgelenkanordnung, aufweisend das Backup-Drehgelenk nach einem der vorhergehenden Ansprüche und das Hauptdrehgelenk, wobei das Hauptdrehgelenk innerhalb des ersten Verbindungsrings (1) und des zweiten Verbindungsrings (2) angeordnet ist und/oder sich durch diese erstreckt.

## Revendications

1. Émerillon de secours destiné à fournir une double sécurité, comprenant
un premier anneau de liaison (1) conçu pour faire passer à travers au moins une corde principale et/ou un émerillon principal,
un second anneau de liaison (2) conçu pour faire passer à travers l'au moins une corde principale et/ou l'émerillon principal,
un premier support en U (3) conçu pour relier au moins une première corde de secours et/ou au moins un premier mousqueton de secours et
un second support en U (4) conçu pour relier au moins une seconde corde de secours et/ou au moins un second mousqueton de secours, moyennant quoi
le premier anneau de liaison (1) et le second anneau de liaison (2) sont attachés ensemble en torsion,
le premier support en U (3) est attaché au premier anneau de liaison (1) et au second support en U (4) est attaché au second anneau de liaison (2),
le premier anneau de liaison (1) comprend et/ou fait partie d'un premier cylindre de liaison de l'émerillon de secours, le second anneau de liaison (2) comprend et/ou fait partie d'un second cylindre de liaison de l'émerillon de secours et le premier cylindre de liaison est au moins partiellement agencé de manière radiale au sein du second cylindre de liaison,
le premier support en U (3) est attaché de manière pivotante par ses branches au premier anneau de liaison (1) et/ou le second support en U (4) est attaché de manière pivotante par ses branches au second anneau de liaison (2), et
un axe de pivotement du premier support en U (3) et/ou du second support en U (4) s'étend de manière orthogonale à un axe de torsion du premier anneau de liaison (1) et du second anneau de liaison (2).

2. Émerillon de secours selon la revendication précédente, moyennant quoi le premier anneau de liaison (1) et le second anneau de liaison (2) sont attachés ensemble en torsion au moyen d'un palier (7).

3. Émerillon de secours selon l'une quelconque des revendications précédentes, moyennant quoi le second cylindre de liaison comprend un diamètre externe supérieur à celui du premier cylindre de liaison, un diamètre interne du second cylindre de liaison correspond de manière approximative, en particulier correspond au diamètre externe du premier cylindre de liaison et/ou le premier cylindre de liaison comprend une extension axiale supérieure à celle du second cylindre de liaison.

4. Émerillon de secours selon l'une quelconque des deux revendications précédentes, moyennant quoi le premier cylindre de liaison comprend un collier s'étendant de manière radiale (8) conçu pour limiter un déplacement axial du second cylindre de liaison.

5. Émerillon de secours selon la revendication précédente, moyennant quoi le premier support en U (3) est attaché au premier cylindre de liaison au niveau d'une extrémité de celui-ci et le collier (8) est agencé au niveau d'une autre extrémité opposée du premier cylindre de liaison de telle sorte qu'en particulier le second cylindre de liaison est agencé de manière axiale entre le collier (8) et le premier support en U (3).

6. Émerillon de secours selon l'une quelconque des deux revendications précédentes, moyennant quoi
le collier (8) et le second cylindre de liaison comprennent un diamètre externe égal, ou
le collier (8) comprend un diamètre externe inférieur, en particulier inférieur de 3 %, à celui du second cylindre de liaison.

7. Émerillon de secours selon l'une quelconque des revendications précédentes, moyennant quoi le premier support en U (3) est attaché au premier anneau de liaison (1) et/ou le second support en U (4) est attaché au second anneau de liaison (2) tel qu'en particulier par un rivet (5, 6) et/ou un boulon.

8. Émerillon de secours selon l'une quelconque des revendications précédentes, moyennant quoi le premier support en U (3) et/ou le second support en U (4) est pourvu en tant que support en arc attaché par ses extrémités opposées respectives aux côtés radiaux opposés du premier anneau de liaison (1) et/ou du second anneau de liaison (2).

9. Agencement d'émerillon comprenant l'émerillon de secours selon l'une quelconque des revendications précédentes et l'émerillon principal, moyennant quoi l'émerillon principal est agencé au sein de et/ou passe à travers le premier anneau de liaison (1) et le second anneau de liaison (2).
